# EUROPÄISCHE PATENTANMELDUNG

(11) **EP 0 565 825 A1**
(43) Veröffentlichungstag der Anmeldung: **20.10.1993**
(21) Anmeldenummer: 93102185.1
(22) Anmeldetag: 12.02.1993
(51) Int. Cl.: C08F 2/16

(54) **Verfahren zur Herstellung von wässrigen Polymerdispersionen**

(30) Priorität: 16.04.1992 DE 4212768
(71) Anmelder: HÜLS AKTIENGESELLSCHAFT, D-45764 Marl (DE)
(72) Erfinder: Sauer, Thomas, Dr., W-4358 Haltern (DE); Stützel, Bernhard, Dr., W-4370 Marl (DE)

(57) **Zusammenfassung**

Gegenstand ist ein Verfahren zur Herstellung von vorwiegend sterisch stabilisierten Kunststoffdispersionen durch Polymerisation von ethylenisch ungesättigten Monomeren in wäßriger Phase als Dispersionsmedium in Gegenwart eines wasserlöslichen Makromonomeren auf Basis von Maleinsäure oder Fumarsäure sowie eines Initiatorsystems, dadurch gekennzeichnet, daß das Makromonomere ein Veresterungsprodukt aus Maleinsäure oder Fumarsäure bzw. Maleinsäureanhydrid mit Polyalkylenglykolen oder deren Derivaten mit Veresterungsgraden zwischen 50 und 100 % ist.

Die nach diesem Verfahren erhaltenen Dispersionen zeichnen sich auch ohne Zusatz der üblichen Emulgiermittel und Emulgierhilfsmittel durch hohe Elektrolytstabilität, Scherstabilität und Froststabilität aus.

## Beschreibung

Gegenstand der vorliegenden Erfindung ist die Herstellung vorwiegend sterisch stabilisierter, wäßriger Kunststoffdispersionen unter Verwendung von Makromonomeren, die aus Maleinsäureestern oder Fumarsäureestern des Polyethylenglykols bzw. dessen Derivaten bestehen.

Die Verwendung von Polyethylenoxy-haltigen Maleinsäureestern als Stabilisatoren für wäßrige Polymerdispersionen ist bekannt. So werden beispielsweise in der DE-OS 27 54 140 polymere Emulgatoren beschrieben, die durch Umsetzung von Polybutadien-Maleinsäureanhydrid-Copolymer mit Polyethylenglykolen bzw. deren Monoalkylethern erhalten werden. Die Herstellung solcher Kammpolymere ist ein mehrstufiges Verfahren, das insbesondere die Herstellung des polymeren Grundkörpers und die polymeranaloge Umsetzung mit Polyethylenglykol bzw. dessen Derivaten umfaßt. Die genaue Produktkontrolle, insbesondere bei der polymeranalogen Umsetzung, ist üblicherweise sehr schwierig.

Eine Verbesserung wird erreicht, wenn man ein solches oberflächenaktives Kammpolymeres direkt herstellt, indem überwiegend hydrophobe Monomere mit ethylenisch ungesättigten Derivaten des Polyethylenglykols copolymerisiert werden. Diese Vorgehensweise wird beispielsweise in der DE-OS 15 70 805 und der EP-A-0 248 612 beschrieben. Aber auch hier bleibt der Nachteil, daß das Schutzkolloid aufwendig in einer separaten Reaktion hergestellt werden muß.

Dieser Nachteil kann dadurch umgangen werden, daß das Schutzkolloid in situ bei der Emulsionspolymerisation hergestellt wird. Dazu werden ethylenisch ungesättigte, meist auf Acryl- oder Methacrylsäureestern basierende, hydrophile Oligomere bzw. Polymere, die gemeinhin als Makromonomere bezeichnet werden, zusammen mit weiteren Monomeren in wässriger Phase copolymerisiert. Ein Verfahren dieser Art wird beispielsweise in der EP-A-0 013 478 beschrieben. Über die bekannte Unverträglichkeit der Polyethylenoxy-Ketten mit den vorwiegend hydrophoben Polymerhauptketten und einen statistischen Einbau der Makromonomeren wird deren Verteilung an der Oberfläche der Latexpartikel gewährleistet. Dadurch wird eine Stabilisierung der Polymerdispersion erreicht.

Der statistische Einbau solcher Makromonomere auf der Basis von Acryl- oder Methacrylsäureestern bereitet nach der Lehre der EP-A-0 013 478 Schwierigkeiten, wenn in rein wässriger Emulsion ohne Zusatz eines organischen Cosolvens polymerisiert wird. Insbesondere wird aufgrund der Homopolymerisation dieser wasserlöslichen Makromonomere in rein wässriger Phase bei Verwendung eines wasserlöslichen Initiators keine gute Stabilisierung der Latexpartikel erreicht. Daher wird in der EP-A-0 013 478 unter Zusatz organischer Cosolventien gearbeitet.

Hinzu kommt, daß derartige Makromonomere auf der Basis von (Meth)Acrylsäure im allgemeinen unter Zuhilfenahme eines Inhibitors hergestellt werden, um eine Polymerisation während der Kondensationsreaktion zu vermeiden. Diese Inhibitoren müssen anschließend aufwendig entfernt werden, um die anschließende Emulsionspolymerisation nicht zu stören.

Die gute Wasserlöslichkeit der Makromonomere ist aber dann nicht nachteilig, wenn diese nicht homopolymerisieren. Dadurch können ungünstige Konzentrationsverhältnisse der Comonomere in der Wasserphase ausgeglichen werden. Bekannt ist das in dieser Hinsicht günstige Copolymerisationsverhalten von Maleinsäure und seinen Derivaten. So werden beispielsweise in der DE-PS 11 00 958 polyethylenoxyhaltige Maleinsäurehalbester oder gemischte Maleinsäure-Polyethylenglykol-Alkylester als Comonomere zur Herstellung von Polymerdispersionen verwendet. Um einen guten Emulgiereffekt zu erzielen, werden vorzugsweise langkettig substituierte omega-Alkyl- oder Alkyl-Aryloxy-Polyethylenglykole verwendet, die stark oberflächenaktiv sind. Die Herstellung solcher Einsatzstoffe muß in einer separaten mehrstufigen Umsetzung erfolgen und ist üblicherweise aufwendig und teuer.

In der DE-OS 33 90 093 werden wäßrige Polymerdispersionen beschrieben, die ohne die üblichen Suspendier- oder Emulgiermittel hergestellt werden können. Die Dispersionen enthalten ein Polymer, das ein Copolymer aus wenigstens einem amphipatischen und wenigstens einem nicht-amphipatischen Monomeren ist. Der lipophile Bestandteil des amphipatischen Monomeren weist ein Molekulargewicht von wenigstens 100 auf und umfaßt wenigstens eine ethylenische Doppelbindung. Baut man das amphipatische Monomere beispielsweise ausgehend von Malein- oder Fumarsäure auf, so kann die erforderliche lipophile Natur dadurch ausgebildet werden, daß man sie in Derivate überführt, die Kohlenwasserstoffketten aufweisen, z. B. durch Veresterung mit Fettalkoholen bis zur Stufe des Halbesters. Zusätzlich kann ein polymerer wasserunlöslicher Bestandteil, beispielsweise ein Poly(oxypropylen) oder ein Poly(oxybutylen), aufgepfropft werden. Im Beispiel 4 dieser Schrift scheinen beide Maßnahmen vereinigt worden zu sein.

Die gemäß der DE-OS 33 90 093 eingesetzten amphipatischen Monomere besitzen eine Emulgatorwirkung. Wegen des naturgemäß unvollständigen Einbaus bei der Polymerisation enthält der Latex immer einen Restgehalt derartiger Moleküle, die infolge ihres Tensidcharakters die Einstellung einer hohen Oberflächenspannung, wie sie für bestimmte Anwendungen verlangt wird, erschweren. Als gravierender Nachteil hat sich zudem erwiesen, daß derartige Latices bei der Aufarbeitung und bei der Anwendung zu starker Schaumbildung neigen.

Aufgabe der vorliegenden Erfindung war die Herstellung wäßriger Kunststoffdispersionen, die sich auch ohne Zusatz der üblichen Emulgiermittel und Emulgierhilfsmittel durch hohe Elektrolytstabilität, Scherstabilität und Froststabilität auszeichnen und deren Viskosität über weite Grenzen eingestellt werden kann. Insbesondere wurde darauf Wert gelegt, daß diese Aufgabe mit Monomeren gelöst wurde, die sich sehr einfach und kostengünstig herstellen lassen. Die erhaltenen Dispersionen sollten frei von organischen Cosolventien erhalten werden können.

Überraschenderweise kann diese Aufgabe durch ein Verfahren gelöst werden, bei dem ethylenisch ungesättigte Monomere in wäßriger Phase als Dispersionsmedium in Gegenwart eines wasserlöslichen Makromonomeren auf Basis von Malein- oder Fumarsäure sowie eines Initiatorsystems polymerisiert werden, das dadurch gekennzeichnet ist, daß das Makromonomere ein Veresterungsprodukt aus Malein- oder Fumarsäure bzw. Maleinsäureanhydrid mit Polyalkylenglykolen oder dessen Derivaten mit Veresterungsgraden zwischen 50 und 100 % ist.

Als Polyalkylenglykol eignen sich vorzugsweise Polyethylenglykol bzw. dessen Monoether mit einer niederen Alkylgruppe, wobei in der Regel der mittlere Polymerisationsgrad zwischen 5 und 500 liegen sollte und die Alkylgruppe maximal 6 Kohlenstoffatome und besonders bevorzugt maximal 4 Kohlenstoffatome besitzen sollte.

Weiterhin können auch ethoxylierte Derivate von langkettigen Fettalkoholen, Phenolen oder alkylierten Phenolen zur Herstellung erfindungsgemäßer Makromonomere eingesetzt werden.

Ein erfindungsgemäß geeignetes und kostengünstig herzustellendes Makromonomeres auf der Basis von Maleinsäure als polymerisierbarer Einheit wird erzeugt durch die Umsetzung von Maleinsäureanhydrid mit Polyethylenglykolen oder deren kurzkettigen Monoalkylethern bei erhöhten Temperaturen. Die dabei erhaltenen Halbester können unter Zuhilfenahme saurer Katalysatoren zu den Diestern umgesetzt werden. Der Veresterungsgrad wird dabei durch Stöchiometrie und Reaktionsbedingungen eingestellt.

Die Verwendung eines Lösemittels bei der Reaktion ist möglich, aber nicht notwendig, so daß die Reaktion zweckmäßigerweise in Masse durchgeführt wird. Der Veresterungsgrad der Produkte kann durch die Reaktionsführung zwischen 50 und 100 % variiert bzw. durch nachträgliches Mischen von Mono- und Diestern eingestellt werden. Diese nach den bekannten Methoden der Veresterung durchgeführte Herstellungsweise kann vorzugsweise auch als Vorstufe zu der eigentlichen Emulsionspolymerisation im gleichen Reaktionsgefäß durchgeführt werden. Auf den Zusatz eines Inhibitors kann und sollte bei der Veresterung verzichtet werden.

Besonders bevorzugte Makromonomere sind die Maleinsäureester von Polyethylenglykolen und deren Monomethylethern mit mittleren Polymerisationsgraden zwischen 40 und 500 und einem Veresterungsgrad von 50 bis 100 %.

Die eigentliche Emulsionspolymerisation wird mit diesen so hergestellten Makromonomeren vorzugsweise ohne Zusatz weiterer Emulgiermittel oder Emulgierhilfsmittel durchgeführt. Die erfolgreiche Herstellung von Polymerdispersionen nach einem solchen Verfahren ist überraschend, da die erfindungsgemäß besonders bevorzugten Makromonomeren von Natur aus keine oberflächenaktiven Eigenschaften besitzen.

Die Maleinsäureester werden vorzugsweise in einer Menge von 1 bis 15 Gew.-% und besonders bevorzugt von 3 bis 12 Gew.-%, bezogen auf die Gesamtmonomermenge, verwendet. Sie können in reiner Form oder als Mischung verschiedener Derivate eingesetzt werden. Weiterhin können zum Erreichen zusätzlicher Eigenschaften bei Bedarf gebräuchliche anionische, kationische oder nichtionische Emulgiermittel oder Schutzkolloide als Zusätze verwendet werden, die aber zur erfolgreichen Herstellung einer erfindungsgemäßen Polymerdispersionen nicht notwendig sind.

Geeignete Monomere für die Polymerisation sind beispielsweise ethylenisch ungesättigte Verbindungen wie Ethylen und alkyl- oder aryl-substituierte Monoolefine wie Propylen, Styrol und α-Methylstyrol, mehrfach ungesättigte Olefine, vorzugsweise Butadien und Isopren, Alkyl-vinylether mit linearen oder verzweigten Alkylresten ausgehend von aliphatischen Carbonsäuren mit 2 bis 18 Kohlenstoffatomen, vorzugsweise Vinylacetat, Vinylbutyrat oder handelsübliche, α-verzweigte C9/C10-Carbonsäure-Vinylester. Weiterhin eignen sich die Alkylester der Acryl- und Methacrylsäure mit linearen und verzweigten Alkylgruppen mit 1 bis 18 Kohlenstoffatomen, vorzugsweise Methyl(meth-)acrylat, Ethyl(meth-)acrylat, lineare und verzweigte Butyl(meth-)acrylate und Ethylhexyl(meth-)acrylat. Weiterhin geeignet sind Vinylchlorid, Acrylnitril sowie die Alkylester anderer ethylenisch ungesättigter Säuren wie Fumar-, Malein- und Itaconsäure. Ebenso geeignet sind stärker wasserlösliche Monomere wie (Meth-)Acrylsäure, (Meth-)Acrylamid und Hydroxyalkylderivate der (Meth-)Acrylsäure wie Hydroxyethyl(meth-)acrylat, die häufig als Comonomere eingesetzt werden. Für bestimmte Anwendungen können bekannte Vernetzungsmittel zugesetzt werden. Die Polymerisation kann absatzweise (Batch-Verfahren), im Zulaufverfahren (semikontinuierlich) oder auch vollkontinuierlich erfolgen. Bei Verwendung mehrerer Monomere können diese als Einzelkomponenten oder als Gemisch dem Polymerisationsgefäß zugeführt werden.

Besonders bevorzugte Monomere sind Styrol, Butadien und Alkyl(meth)acrylate mit 1 bis 8 Kohlenstoffatomen in der Alkylkette. Besonders bevorzugte Comonomere sind (Meth-)Acrylsäure und (Meth-)Acrylamid.

Im Fall der Emulsionspolymerisation wird mit den üblichen Radikalbildnern gestartet. Dazu können thermisch zerfallende Peroxide, Hydroperoxide oder Azoinitiatoren verwendet werden. Diese können wasser- oder monomerlöslich sein, und sie können allein oder im Gemisch eingesetzt werden. Weiterhin können geeignete Reduktionsmittel wie Natriumformaldehydsulfoxylat, Natrium- und Kaliumsulfit bzw. -bisulfit und Ascorbinsäure zur kontrollierten Steuerung des Initiatorzerfalls eingesetzt werden. Bevorzugte Initiatoren sind Natriumperoxodisulfat und tert.-Butylhydroperoxid, letzteres vorzugsweise in Kombination mit Natriumformaldehydsulfoxylat als Reduktionsmittel. Initiatoren und Reduktionsmittel werden in einer Gesamtmenge von 0,01 bis 3,5 Gew.-%, bezogen auf die gesamten Monomere, eingesetzt.

Weiterhin können wasser- oder öllösliche Regler zur Beeinflussung der Vernetzung und des Gehaltes an Gelpartikeln eingesetzt werden. Geeignete Regler sind Mercaptane, vorzugsweise Dodecylmercaptan, oder Triethanolamin. Diese werden in einer Menge von 0,01 bis 3 Gew.-%, bezogen auf die gesamten Monomere, eingesetzt.

Die Durchführung der Emulsionspolymerisation geschieht in einem üblichen Polymerisationsreaktor. Dazu werden Initiatoren, Maleinsäure-Makromonomere, eventuell verwendete wasserlösliche Comonomere und Regler zusammen mit Wasser vorgelegt. Das Hauptmonomer bzw. Monomerengemisch kann entweder vor Beginn der Reaktion komplett oder während der Reaktion in einzelnen Chargen, vollkontinuierlich oder vorzugsweise nach einem semikontinuierlichen Zulaufverfahren zugegeben werden. Ebenso können Initiatoren oder Teile des Initiatorsystems, vorzugsweise das Reduktionsmittel, im Zulauf dosiert werden. Die Polymerisation wird üblicherweise bei 5 bis 95 Grad Celsius durchgeführt, vorzugsweise zwischen 50 und 90 Grad Celsius.

In einer besonders bevorzugten Form wird die Polymerisationsreaktion nach einem Monomerzulaufverfahren durchgeführt.

Die Polymerisation kann so durchgeführt werden, daß erfindungsgemäße Polymerdispersionen mit einem Feststoffgehalt zwischen 10 und 70 %, vorzugsweise zwischen 30 und 70 %, bezogen auf die Gesamtmasse der Dispersion, erhalten werden. Der Feststoffgehalt wird über das Monomer/Wasser-Verhältnis bzw. durch nachträgliches Aufkonzentrieren eingestellt.

Durch geeignete Wahl des erfindungsgemäßen Makromonomeren sowie durch Durch geeignete Wahl des erfindungsgemäßen Makromonomeren sowie durch Wahl der Reaktionsbedingungen kann die Viskosität der Polymerdispersion über einen weiten Bereich eingestellt werden.

Die erfindungsgemäßen Dispersionen zeichnen sich dadurch aus, daß sie eine erhöhte Stabilität im stark alkalischen Bereich und insbesondere in Zement aufweisen. Weiterhin zeigen die Dispersionen erhöhte Elektrolyt-, Scher- und Froststabilität sowie einen geringen Koagulat- und Restmonomeranteil. Die aus den Dispersionen erhaltenen Polymerfilme zeigen eine erhöhte Wasserfestigkeit. Sie eignen sich daher zum Einsatz als Klebemittel sowie als Bindemittel für alle Arten von Beschichtungen und Anstrichen sowie als Zusatz für hydraulisch abbindende Massen wie Beton und Zementmörtel. Die erfindungsgemäßen Dispersionen eignen sich auch für die Herstellung von Dispersionspulvern.

Ein weiterer Vorteil dieser Maleinsäure-Makromonomere ergibt sich aus deren Eigenschaft, daß sie als Zusatz bei der Herstellung von üblichen anionisch stabilisierten Dispersionen eine weitere Absenkung des Koagulatanteils bewirken.

Die Herstellung erfindungsgemäßer Dispersionen wird in den folgenden Beispielen erläutert. Die angegebenen Viskositäten wurden mit einem Brookfield-Viskosimeter bestimmt. Teile (T.) bedeuten darin Gewichtsteile und Prozent (%) Gewichtsprozent.

### Beispiele

### Maleinsäure-Makromonomere

Die in den folgenden Beispielen verwendeten Makromonomere wurden hergestellt durch Erhitzen von äquimolaren Mengen an Maleinsäureanhydrid und einem Polyethylenglykolderivat bei 80 °C für 1 h. Die so erhaltenen Monoester wurden nach Bedarf mit einem weiteren Äquivalent eines Polyethylenglykols (PEG) oder eines Derivates und 0.5 % conc. Schwefelsäure weitere 2 bis 4 h bei 140 °C zu den Diestern umgesetzt. Tabelle I führt die in den Beispielen verwendeten Makromonomere auf.

**Tabelle I**

| Makromonomer | PEG-derivat | Ethylenoxidheiten (Zahlenmittel) | Veresterungsgrad (Prozent) |
|---|---|---|---|
| 1 | PEG-monomethylether | 45 | 65 |
| 2 | PEG | 455 | 50 |
| 3 | PEG-monomethylether | 43 | 80 |
| 4 | PEG | 45 | 50 |
| 5 | PEG | 45 | 100 |
| 6 | PEG | 136 | 65 |
| 7 | PEG-monomethylether | 8 | 60 |

### Beispiel 1

In einem mit Dosiereinrichtungen und Temperaturregelung ausgerüsteten Polymerisationsreaktor wurden 80 T. Wasser, 0.8 T. t-Butylhydroperoxid und 5 T. Makromonomer 1 (siehe Tabelle I) vorgelegt. Bei 70 °C wurde ein Gemisch aus 80 T. Vinylacetat und 20 T. Neodecansäure-vinylester (VeoVa 10, Shell) in 3 h und eine Lösung von 0.6 T. Natriumformaldehydsulfoxylat in 30 T. Wasser in 4 h zudosiert. Nach weiteren 2 h wurde eine Dispersion mit 46.9 % Feststoffgehalt und einer Viskosität von 20 mPa s erhalten.

### Beispiel 2

Beispiel 1 wurde wiederholt, jedoch wurden 5 T. Makromonomer 2 (siehe Tabelle I) in die Vorlage gegeben. Die erhaltene Dispersion hatte einen Feststoffgehalt von 46.8 % und eine Viskosität von 1200 mPa s.

Die Beispiele 1 und 2 zeigen den Einfluß des Molekulargewichts des Makromonomeren auf die Latexviskosität.

### Beispiel 3

In einem mit Dosiereinrichtungen und Temperaturregelung ausgerüsteten Polymerisationsreaktor wurden 85 T. Wasser, 0.8 T. t-Butylhydroperoxid, 2 T. Acrylamid und 5 T. Makromonomer 3 (siehe Tabelle I) vorgelegt. Bei 70 °C wurde ein Gemisch aus 40 T. Styrol und 60 T. n-Butylacrylat in 3 h und eine Lösung von 0.6 T. Natriumformaldehydsulfoxylat in 30 T. Wasser in 5 h zudosiert. Nach weiteren 2 h wurde eine Dispersion mit einem Feststoffgehalt von 49,2 % und einer Viskosität von 320 mPa s erhalten.

### Beispiel 4

Beispiel 3 wurde wiederholt, jedoch wurden 5.25 T. Makromonomer 2 (siehe Tabelle I) in die Vorlage gegeben. Die erhaltene Dispersion hatte einen Feststoffgehalt von 50.6 % und eine Viskosität von 3360 mPa s.

### Beispiel 5

Beispiel 4 wurde wiederholt, jedoch wurden 10 T. Makromonomer 2 (siehe Tabelle I) in die Vorlage gegeben. Die erhaltene Dispersion hatte einen Feststoffgehalt von 49.9 % und eine Viskosität von 8900 mPa s.

Die Beispiele 3 bis 5 zeigen den Einfluß von Molekulargewicht und Menge des eingesetzten Makromonomeren auf die Latexviskosität.

### Beispiel 6

Beispiel 3 wurde wiederholt, jedoch wurden 5 T. Makromonomer 6 (siehe Tabelle I) in die Vorlage gegeben. Die erhaltene Dispersion hatte einen Feststoffgehalt von 48,4 % und eine Viskosität von 144 mPa s.

### Beispiel 7

Beispiel 3 wurde wiederholt, jedoch wurden 5 T. Makromonomer 7 (siehe Tabelle 1) in die Vorlage gegeben. Die erhaltene Dispersion hatte einen Feststoffgehalt von 46,1 % und eine Viskosität von 16 mPa s.

### Beispiel 8

In einem mit Dosiereinrichtungen und Temperaturregelung ausgerüsteten Polymerisationsreaktor wurden 4.66 T. eines ethoxylierten C16/C18-Fettalkoholgemisches (25 Mol Ethylenoxid pro Mol Fettalkohol) und 0.34 T. Maleinsäureanhydrid bei 85 °C 1 h umgesetzt. Danach wurden 80 T. Wasser, 0.8 T. t-Butylhydroperoxid und 2 T. Acrylamid zugegeben. Bei 75 °C wurde ein Gemisch aus 40 T. Styrol und 60 T. n-Butylacrylat und eine Lösung von 0.6 T. Natriumformaldehydsulfoxylat in 30 T. Wasser in 3 h zudosiert. Nach weiteren 2 h wurde eine Dispersion mit einem Feststoffgehalt von 50.1 % und einer Viskosität von 5600 mPa s erhalten.

### Beispiel 9

Beispiel 8 wurde wiederholt, jedoch wurden 2.8 T. ethoxylierter C16/C18-Fettalkohol und 0.2 T. Maleinsäureanhydrid bei 85 °C umgesetzt. Die erhaltene Dispersion hatte einen Feststoffgehalt von 49.9 % und eine Viskosität von 1560 mPa s.

### Nicht erfindungsgemäßes Vergleichsbeispiel

Beispiel 8 wurde wiederholt, jedoch wurde anstatt der Vorreaktion des ethoxylierten Fettalkoholgemisches mit Maleinsäureanhydrid lediglich 5 T. des ethoxylierten C16/C18-Fettalkoholgemisches (25 Mol Ethylenoxid pro Mol Fettalkohol) mit in die Vorlage gegeben. Die erhaltene Dispersion hatte einen Feststoffgehalt von 42.2 % und war nicht auspolymerisiert.

Die Beispiele 8 bis 9 zeigen eine Variante, in der das Makromonomere im Reaktor in einer Vorreaktion zur Emulsionspolymerisation hergestellt wurde. Das Vergleichsbeispiel zeigt, daß unter vergleichbaren Bedingungen ohne Maleinsäure-Makromonomere kein befriedigendes Produkt entsteht.

### Beispiel 10

In einem mit Dosiereinrichtungen und Temperaturregelung ausgerüsteten Polymerisationsreaktor wurden 45 T. Wasser, 0.8 T. t-Butylhydroperoxid, 5 T. Makromonomer 4 (siehe Tabelle I) und 0.1 T. NaOH vorgelegt. Bei 70 °C wurde ein Gemisch aus 10 T. Styrol und 90 T. n-Butylacrylat in 4 h und eine Lösung von 0.6 T. Natriumformaldehydsulfoxylat in 10 T. Wasser in 5 h zudosiert. Nach weiteren 2 h wurde eine Dispersion mit einem Feststoffgehalt von 66.0 % und einer Viskosität von 1820 mPa s erhalten.

### Beispiel 11

Beispiel 10 wurde wiederholt, jedoch wurden 80 T. Wasser in die Vorlage gegeben. Die erhaltene Dispersion hatte einen Feststoffgehalt von 49.1 % und eine Viskosität von 14 mPa s.

### Beispiel 12

Beispiel 10 wurde wiederholt, jedoch wurden 80 T. Wasser und 2.3 T. NaOH sowie zusätzlich 4 T. Acrylsäure in die Vorlage gegeben. Die erhaltene Dispersion hatte einen Feststoffgehalt von 50.0 % und eine Viskosität von 1200 mPa s.

Die Beispiele 10 bis 12 zeigen den Einfluß des Feststoffgehaltes und der wasserlöslichen Comonomere auf die Latexviskosität. Die Teilchengrößen lagen zwischen 350 und 600 nm.

### Beispiel 13

In einem mit Dosiereinrichtungen und Temperaturregelung ausgerüsteten Polymerisationsreaktor wurden 160 T. Nasser, 1 T. Natriumperoxodisulfat, 1.6 T. t-Butylhydroperoxid, 12 T. Makromonomer 1 (siehe Tabelle I), 0.2 T. t-Dodecylmercaptan und 2 T. Acrylamid vorgelegt. Von einem Gemisch aus 60 T. Styrol und 40 T. Butadien wurden bei 75 °C 10 % in den Reaktor gegeben und nach 1 h die restliche Menge in 3 h und eine Lösung von 0.6 T. Natriumformaldehydsulfoxylat in 40 T. Wasser in 4 h kontinuierlich zudosiert. Nach weiteren 5 h wurde eine Dispersion mit einem Feststoffgehalt von 34.0 % und einer Viskosität von 120 mPa s erhalten.

### Beispiel 14

Beispiel 13 wurde wiederholt, jedoch wurden davon abweichend 190 T. Wasser, 8 T. Makromonomer 5 (siehe Tabelle I) und 4 T. Acrylamid in die Vorlage gegeben. Von einem Gemisch aus 60 T. Styrol und 40 T. Butadien wurden bei 80 °C 10 % in den Reaktor gegeben und nach 1 h die restliche Menge in 4 h und eine Lösung von 0.8 T. Natriumformaldehydsulfoxylat in 40 T. Wasser in 6 h kontinuierlich zudosiert. Die erhaltene Dispersion hatte einen Feststoffgehalt von 33.0 % und eine Viskosität von 5600 mPa s.

### Beispiel 15

Beispiel 14 wurde wiederholt, jedoch wurden nur 3 T. Acrylamid in die Vorlage gegeben. Die erhaltene Dispersion hatte einen Feststoffgehalt von 32.2 % und eine Viskosität von 260 mPa s.

### Beispiel 16

Beispiel 14 wurde wiederholt, jedoch wurden nur 6 T. Makromonomer 5 (siehe Tabelle I) in die Vorlage gegeben. Die erhaltene Dispersion hatte einen Feststoffgehalt von 30.4 % und eine Viskosität von 400 mPa s.

Die Beispiele 13 bis 16 zeigen den Einfluß der Menge an Makromonomer und wasserlöslichem Comonomer auf die Latexviskosität. Die mittleren Teilchengrößen lagen zwischen 150 und 190 nm.

## Patentansprüche

1. Verfahren zur Herstellung von Kunststoffdispersionen durch Polymerisation von ethylenisch ungesättigten Monomeren in wäßriger Phase als Dispersionsmedium in Gegenwart eines wasserlöslichen Makromonomeren auf Basis von Maleinsäure oder Fumarsäure sowie eines Initiatorsystems,
dadurch gekennzeichnet,
daß das Makromonomere ein Veresterungsprodukt aus Maleinsäure oder Fumarsäure bzw. Maleinsäureanhydrid mit Polyalkylenglykolen oder deren Derivaten mit Veresterungsgraden zwischen 50 und 100 % ist.

2. Verfahren gemäß Anspruch 1,
dadurch gekennzeichnet,
daß als Polyalkylenglykol oder dessen Derivat ein Polyethylenglykol oder dessen Monoether mit einer niederen Alkylgruppe eingesetzt wird.

3. Verfahren gemäß den Ansprüchen 1 oder 2,
dadurch gekennzeichnet,
daß der mittlere Polymerisationsgrad des Polyalkylenglykols zwischen 5 und 500 und bevorzugt zwischen 40 und 500 liegt.

4. Verfahren gemäß einem der vorhergehenden Ansprüche,
dadurch gekennzeichnet,
daß das Makromonomere in einem Anteil von 1 bis 15 Gew.-%, bezogen auf die Gesamtmonomermenge, vorzugsweise von 3 bis 12 Gew.-%, eingesetzt wird.

5. Verfahren gemäß einem der vorhergehenden Ansprüche,
dadurch gekennzeichnet,
daß die Polymerisation semikontinuierlich verläuft.

6. Verfahren gemäß einem der vorhergehenden Ansprüche,
dadurch gekennzeichnet,
daß das Initiatorsystem aus einem monomerlöslichen Hydroperoxid und einem wasserlöslichen Reduktionsmittel besteht.

7. Kunststoffdispersion, hergestellt durch ein Verfahren gemäß einem der vorhergehenden Ansprüche.
